(19) Europäisches Patentamt / European Patent Office / Office européen des brevets

(11) EP 1 633 804 B1

(12) **EUROPEAN PATENT SPECIFICATION**

(45) Date of publication and mention of the grant of the patent:
**17.10.2007 Bulletin 2007/42**

(21) Application number: **04748645.1**

(22) Date of filing: **10.06.2004**

(51) Int Cl.:
***C08G 83/00*** *(2006.01)*

(86) International application number:
**PCT/NL2004/000413**

(87) International publication number:
**WO 2004/111110 (23.12.2004 Gazette 2004/52)**

(54) **PROCESS FOR THE PRODUCTION OF AN ISOTROPIC POLYMERIC NETWORK**

VERFAHREN ZUR HERSTELLUNG EINES ISOTROPEN POLYMEREN NETZWERKS

PROCEDE POUR PRODUIRE UN RESEAU POLYMERE ISOTROPE

(84) Designated Contracting States:
**AT BE BG CH CY CZ DE DK EE ES FI FR GB GR HU IE IT LI LU MC NL PL PT RO SE SI SK TR**

(30) Priority: **13.06.2003 EP 03076841**

(43) Date of publication of application:
**15.03.2006 Bulletin 2006/11**

(73) Proprietor: **DSM IP Assets B.V.**
**6411 TE Heerlen (NL)**

(72) Inventors:
- **MARISSEN, Roelof**
  **NL-6121 HS Born (NL)**
- **LANGE, Ronald, Frans, Maria**
  **67061 Ludwigshafen (DE)**
- **PUT, Jozef, Albert**
  **B-3590 Diepenbeek (BE)**
- **VAN DIJK, Joachim**
  **B-2580 Putte (BE)**

(74) Representative: **Steffanie, Leonardus Gerardus**
**DSM Intellectual Property**
**P.O. Box 9**
**6160 MA Geleen (NL)**

(56) References cited:
- **TAMAKI R ET AL: "A POLYIMIDE NANOCOMPOSITE FROM OCTA (AMINOPHENYL)SILSESQUIOXANE" CHEMISTRY OF MATERIALS, AMERICAN CHEMICAL SOCIETY, WASHINGTON, US, vol. 15, 17 January 2003 (2003-01-17), pages 793-797, XP001153895 ISSN: 0897-4756**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 633 804 B1

## Description

The present invention relates to a process for the production of an isotropic polymeric network comprising multifunctional molecules by contacting in a solvent an amount of multifunctional molecules with an amount of a coupling agent.

Isotropic polymeric networks as such are known e.g. from Ullman's Encyclopedia of Industrial Chemistry, Wiley-VCH Verlag, online posting date 15-6- 2000, DOI: 10.1002/14356007.a21_217. Reported are e.g. unsaturated polyester resins with densities of 1200-1400 kg/$m^3$ and a modulus of elasticity of 3400-4300 MPa, resulting in a specific modulus, i.e. modulus per unit of weight, of between 0.0024 and 0.0036 GPa.$m^3$/kg.

A disadvantage of these isotropic polymeric networks is their relatively low specific modulus. This limits the use of these materials, especially in e.g. aircraft applications where high specific modulus and often also light weight are of great importance.

Properties of a polymeric material as e.g. modulus can generally be further tailored and increased through fillers and/or reinforcing agents as e.g. kaolin, glass fibres and carbon fibres. Adding these fillers and/or reinforcing agents results in an increase in modulus. This increase however only is in a so-called oriented direction of a shaped article whereas a much lower increase in modulus in a direction perpendicular to the oriented direction is achieved. This phenomenon generally is called anisotropy. Moreover the density of the polymeric material increases upon adding fillers. Consequently adding fillers and/or reinforcing agents does increase modulus but also anisotropy and does furthermore result in an unwanted increase in density and a decrease in specific modulus, hereinafter referred to as specific Young's modulus.

Anisotropic materials can not be used for a number of applications due to their properties differing in different directions in a shaped article. This is troublesome in designing of shaped articles.

Goal of the invention is to provide a process that yields an isotropic polymeric network with a high specific Young's modulus.

This goal is achieved with the process of the invention wherein the multifunctional molecules have a functionality, n, of at least 5 and whereby through supramolecular chemistry a bond between the multifunctional molecule and the coupling agent is formed.

In the process according to the invention a bond between the multifunctional molecule and the coupling agent is formed through supramolecular chemistry. Supramolecular chemistry is understood in this application to be the chemistry of non-covalent, oriented, multiple (at least two), cooperative interactions. Examples of bonds obtained through supramolecular chemistry are e.g. a bond achieved through complexation of a transition metal or a bond obtained through multiple (at least two, preferably at least four) hydrogen bonding.

A multifunctional molecule in this application is a molecular unit comprising at least 5 functional groups, wherein at least a substantial amount of the functional groups are in a substantially fixed position towards the other functional groups, or at least towards a set of functional groups. A substantially fixed position can be achieved through various ways, e.g. through the architecture of the molecule, through steric hindrance, or upon reacting the multifunctional molecule during formation of the isotropic polymeric network. Substantially fixed means that the functional groups are at a virtually fixed distance and/or angles towards each other. Examples of the molecular units are diamantane, adamantane, biadamantane, polyhedral oligomeric silsesquioxane and bucky balls. Examples of structural formulas of diamantane, adamantane, biadamantane, polyhedral oligomeric silsesquioxane are given in the formula sheet under respectively structures A-D in which structures X represents a functional group. Preferably the molecular unit comprises a cage like molecule as e.g polyhedral oligomeric silsesquioxane and bucky balls. This results in the best substantially fixed position of the functional groups in a multifunctional molecule.

Functional groups at the multifunctional molecule are those groups that can react with the coupling agent to form a bond with this coupling agent. This bond is obtained through supramolecular chemistry. In the case the bond between the multifunctional molecule and the coupling agent is obtained through complexation of a transition metal, the functional group comprises a suitable ligand. Suitable ligands are e.g. nitrogen or phosphorus containing groups as e.g. terpyridines. In this case the multifunctional molecule is coupled through its ligands with a transition metal as coupling agent.

In the case the the bond between the multifunctional molecule and the coupling agent is formed through multiple hydrogen bonding, the functional group comprises at least two groups able to form each a hydrogen bond, e.g. an amine group. In this case the functional group of the multifunctional molecule comprises reactive groups able to form multiple hydrogen bonds between the multifunctional molecule and the coupling agent.

The number of functional groups at the multifunctional molecule is in this application is referred to as the functionality, n. The value of n of the multifunctional molecule according to the invention is at least 5. Preferably the value of n of the multifunctional molecule according to the invention is at least 6. In this case a higher specific Young's modulus can be obtained. More preferably the value of n of the multifunctional molecule according to the invention is at least 7. This allows the process for the production of an isotropic polymeric network according to the invention to render

an isotropic polymeric network with an even higher specific Young's modulus. Most preferably the value of n of the multifunctional molecule according to the invention is at least 8 functional groups. In this way the process for the production of an isotropic polymeric network according to the invention renders an isotropic polymeric network with a still even higher specific Young's modulus. Best ratio of specific Young's modulus to functionality is achieved when the value of n of the multifunctional molecule according to the invention is 9.

A multifunctional molecule with at least 5 functional groups in the present invention is typically not a dendrimer, because the positions of the functional groups in a dendrimer are not in a geometrically fixed position with respect to each other, nor do they become fixed by reacting with the coupling agent or other multifunctional molecules. If a dendrimer is incorporated into a polymeric network a network is obtained which does not exhibit the highest possible specific Young's modulus.

In the case that the isotropic polymeric network according to the invention is used in an application requiring alkali resistance, preferably only a limited amount or none of the silsesquioxanes is used as multifunctional molecule. These multifunctional molecules yield isotropic polymeric networks with a lower alkali resistance.

A coupling agent in this application is understood to be a molecule with at least two reactive groups, which can react with the multifunctional molecule whereby the coupling agent bonds two multifunctional molecules to each other through supramolecular chemistry. If a bond is obtained through complexation of a transition metal the coupling agent is a transition metal. In this case the number of reactive groups is equal to the coordination ability of the transition metal. Such a transition metal can easily be used, e.g. in the form of a salt. Suitable transition metals are e.g. Ru, Co, Zn and Mn. Readily available is e.g. cobalt and zinc acetate that can suitably be used. Preferably transition metals are used with high coordination ability as e.g. Ru with a coordination ability of 6, for example in the form of $RuCl_3$.

Optionally the coupling agent can furthermore comprise a rod like molecule comprising a head and a tail, each with a reactive group.

In the case that the bond between the multifunctional molecule and the coupling agent is formed through complexation of a transition metal, the reactive group is a suitable ligand i.e. a nitrogen or phosphorus containing group as e.g. a terpyridine. In this case the coupling agent comprises a rod like molecule and a transition metal in preferably a molar ratio of rod like molecule : transition metal of 1:2, which coupling agent couples the multifunctional molecules to each other.

In the case the bond between the multifunctional molecule and the coupling agent is formed through multiple hydrogen bonding, the reactive group of the coupling agent comprises at least two groups each able to form a hydrogen bond, e.g. an amine group. In this case the coupling agent comprises a rod like molecule with reactive groups able to form multiple hydrogen bonds between the reactive group of the coupling agent and the multifunctional molecule.

An advantage of using a coupling agent comprising a rod like molecule is that this enables very low densities to be obtained for the isotropic polymeric network.

The rod like molecule is a structure which is substantially straight and rigid e.g. through its architecture or through steric hindrance. Examples of rod like molecules include cubanes, staffanes, oligoynes, cumulenes, oligophenylenes or polyphenylenes, bi-terpyridines, acetylenes or aromatic oligo- or polyamides. Preferably oligophenylenes, polyphenylenes and bi-terpyridines are used because of their commercial availability and easy processability.

In the process of the invention the rod like molecules are generally dissolved in a solvent. In order to increase the solubility of the rod like molecule the structure of the rod like molecule can be modified. In the case of e.g. oligo- or polyphenylenes aliphatic groups or -chains, e.g. hexylgroups, can be reacted to the rod like molecule as side groups. The amount and type of side groups required for improving the solubility in a given solvent of a rod like molecule can be easily assessed by a skilled man through routine experimentation.

Whether the structure of a rod like molecule is substantially straight and rigid can furthermore be calculated by known computer programs as e.g. available from Accebrys Inc., e.g. through molecular mechanics calculations with the program Discover ('97) using e.g. the CVFF (Consistent Valence Force Field) forcefield. A rod like molecule is defined as substantially straight and rigid when the average radius of giration of a rod like molecule as calculated in a molecular dynamics simulation at roomtemperature is at least equal to 70% of the radius of giration of a rod like molecule in a fully extended state. Preferably the average radius of giration of a rod like molecule as calculated in a molecular dynamics simulation at roomtemperature is at least equal to 80% of the radius of giration of a rod like molecule in a fully extended state. More preferably the average radius of giration of a rod like molecule as calculated in a molecular dynamics simulation at roomtemperature is at least equal to 90% of the radius of giration of a rod like molecule in a fully extended state. Most preferably the average radius of giration of a rod like molecule as calculated in a molecular dynamics simulation at roomtemperature is at least equal to 95% of the radius of giration of a rod like molecule in a fully extended state.

The production of an isotropic polymeric network according to the present invention generally is carried out in a solvent. The solvent preferably is a polar solvent in the case the bond between a multifunctional molecule and coupling agent is formed through complexation of a transition metal. Suitable polar solvents include dimethylformamide, methanol and acetonitrile. Furthermore molten multifunctional molecules can be used as solvent.

The temperature at which the process according to the invention is carried out depends on the conditions

required to form the bond between the multifunctional molecule and the coupling angent. The temperature at which the process is conducted is at least equal to the temperature required to form said bond. The conditions at which the said bonds are formed can be easily determined by the skilled man through routine experimentation. An advantage of obtaining a bond through complexation with a transition metal is that these bonds can be obtained by a reaction at low temperature, e.g. at room temperature. For practical reasons the upper temperature for the process according to the invention will generally be chosen at 350 °C or lower. Preferably the upper temperature will be chosen at 250 °C or lower. More preferably the upper temperature will be chosen at 200 °C or lower.

In the process of the invention the coupling agent is preferably present in an amount that is sufficient to couple the multifunctional molecules to at least 5 other multifunctional molecules. This means that the molar amount of coupling agent is at least 2.5 times more than the molar amount of the multifunctional molecule, since one coupling agent couples to 2 multifunctional molecules. More preferably the molar ratio of coupling agent to multifunctional molecule is n/2 : 1, wherein n is the functionality of the multifunctional molecule.

In an other embodiment of the process of the invention the sum, *p*, of the amount of the multifunctional molecules and coupling agent per unit of volume (in kg/$m^3$) is at least equal to the value as given by expression (1), below.

$$\frac{a(m_1 + \frac{n}{2} m_2)}{10^{26}(d+L)^3} \qquad \text{(I)}$$

in which

- a = 0.2
- d = the diameter of the multifunctional molecule, including the length of the bonds to the middle of atoms of the coupling agent to which it is attached.
- L = the length of the coupling agent, measured between the middle of the atoms that are connected to the multifunctional molecule.
- $m_1$ = the molecular mass of the multifunctional molecule as present in the isotropic polymeric network
- $m_2$ = the molecular mass of the coupling agent as present in the isotropic polymeric network
- n = the functionality of the multifunctional molecule ($n \geq 5$).

Through the value of the sum, ρ, according to expression (1) the process of the invention yields an isotropic polymeric network with a very high specific Young's modulus. An additional advantage is that the isotropic polymeric network obtained with this embodiment has a low density.

The amounts of multifunctional molecules and coupling agent being weight amounts of multifunctional molecule and coupling agent in kg and the volume being the total volume of multifunctional molecule, coupling agent and solvent in $m^3$.

The sum of the amounts of multifunctional molecules and coupling agent, per unit of volume [kg/$m^3$] is hereinafter referred to as the concentration, ρ , of multifunctional molecules and coupling agent.

The diameter of the multifunctional molecule in expression (I) is defined as the diameter of the multifunctional molecule in meter, including the length of the bonds to the middle of atoms of the coupling agent to which it is attached. This means that the bondlength to the coupling agent up to the middle of the atom in which this bond ends is included. The diameter can be determined through known computer programs for molecular modelling as e.g. Discover ('97) from Accebrys Inc.

The length of the coupling agent is defined as the length of the coupling agent in meter, measured between the middle of the atoms that are connected to the multifunctional molecule.

An especially attractive version of the process for the production of a isotropic polymeric network is by reacting the multifunctional molecules with a coupling agent in a stoichiometric ratio whereby the amount of the coupling agent corresponds to the amount of functional groups at the multifunctional molecule, and thereby grow the isotropic polymeric network. The reaction may be performed in a mould and consequently a shaped article is obtained as the grown isotropic polymeric network obtains the shape of the mould in which the reaction is carried out. After reacting the multifunctional molecule with the coupling agent, the solvent may be removed, e.g. by evaporation or extraction in order to obtain a dry isotropic polymeric network.

Surprisingly it was found that if the concentration of the multifunctional molecules and the coupling agent are determined according to expression (I) in which expression the value of 'a' is chosen equal to 0.4 there is no substantial collapse of the formed dry, solvent free isotropic polymeric network upon drying or extracting. This results in the lowest achievable density for that particular combination of multifunctional molecule and coupling agent.

With the process according to the invention an isotropic polymeric network can be obtained with a specific modulus of at least 0.007 GPa.$m^3$/kg and a density of less than 1300 kg/$m^3$. Preferably the specific modulus is at least 0.01 GPa.$m^3$/kg. Preferably the density is lower than 1000 kg/$m^3$ and more preferably the density is lower than 700 kg/$m^3$. This makes the isotropic polymeric network suitable for machine components that are subject to high acceleration forces. Most preferably the density is lower than 500 kg/$m^3$. This makes the isotropic polymeric network very suitable for aerospace applications.

An additional advantage of the isotropic polymeric network according to the invention is that said network does not comprise entrapped gas, e.g. as remainders of blowing agents as usually present in low density materials as foams. Entrapped gas in a material is detrimental in applications at higher temperature due to thermal expansion of the gas. The diffusion of gasses in and out of the material upon temperature changes may cause ageing of the material, e.g. of said foam.

The invention therefore also relates to a new material, an isotropic polymeric network comprising multifunctional molecules with a functionality of at least 5 and a coupling agent, whereby through supramolecular chemistry a bond between the multifunctional molecule and the coupling agent is formed, with a density lower than 1300 kg/$m^3$ and a specific Young's modulus of at least 0.007 GPa.$m^3$/kg, as well as shaped articles comprising the isotropic polymeric network according to the invention.

Due to the high specific Young's modulus the isotropic polymeric network according to the invention is furthermore suitable as construction material.

The invention will be further elucidated with the following non-limiting example.

Example I

Synthesis of a molecular network comprising a multifunctional molecule based on adamantane, functionalized with 8 terpyridine structures.

Phase A: Synthesis of a multifunctional molecule.

- Step a.: Synthesis of 1,3,5,7-Tetrabromoadamantane

Adamantane (19.44g, 143 mmol) was added to a stirred solution of bromine (90 ml) and anhydrous aluminium chloride (20g, 150 mmol) at 0°C. The obtained mixture was then heated to 70°C and held at that temperature for 24 h. The mixture was treated subsequently with aqueous sodium sulfite and hydrochloric acid. A solid was obtained which was filtered, dried in vacuo, and recrystallized from acetonitrille to give 1,3,5,7-tetrabromoadamantane.

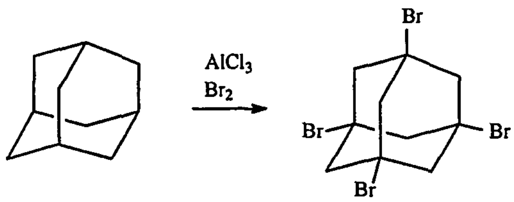


- Step b.: Synthesis of 1,3,5,7-Tetrakis(1,3-dibromophenyl)adamantane

A 250-ml three-neck flask was fitted with a water condenser, a stirrer, a nitrogen inlet and outlet to a NaOH solution. The flask was placed in an ice bath and to this flask was added 2.5g (5.5 mmol) of 1,3,5,7-tetrabromoadamantane, as obtained through step a. above, 1,3-bromobenzene (50 ml), and $AlBr_3$ (0.7g, 2.5 mmol). A mixture was obtained and stirred at 0°C for 5h, allowed to warm to room temperature overnight, and was finally heated at 60°C for 6h. This mixture was the poured onto acidic ice. After the ice was molten layers were obtained and separated. One layer was a so-called organic layer which was washed with water and a saturated NaCl solution and by precipitation into methanol a product was obtained which through chromatographic separation on silicagel with a mixture of hexane/chloroform a (1/10) and b (1/1) as eluent and recrystallization in chloroform gave 1,3,5,7-tetrakis(1,3-dibromophenyl)adamantane.

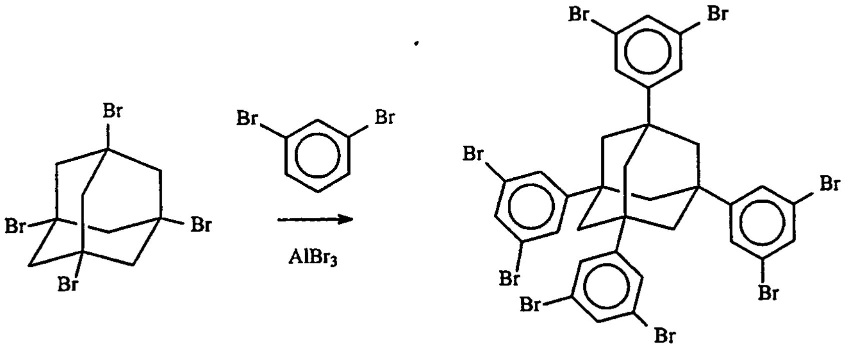


• Step c.: Synthesis of E)-3-(4"-Bromophenyl)-1-(pyrid-2'-yl)prop-2-enone

4-Bromobenzaldehyde (37.0g, 200 mmol) was dissolved in methanol (500 ml). 1M NaOH (150 ml) and 2-acetylpyridine (25.6g, 211 mmol) was added and the obtained reaction mixture was stirred for 30 min. A precipitate resulted which was filtered off, dissolved in $CH_2Cl_2$ and washed with water and recrystallized from methanol to give E)-3-(4"-bromophenyl)-1-(pyrid-2'-yl)prop-2-enone.

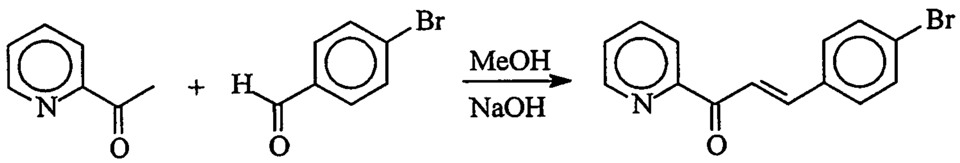


• Step d.: Synthesis of N-[2-(pyrid-2'-yl)-2-oxoethyl]pyridinium iodide

To a solution of 2-acetylpyridine (24.2g, 200 mmol) in dry pyridine (50 ml) was added a solution of $I_2$ (51g, 200 mmol) in dry pyridine (150 ml). The reaction mixture was refluxed for 3 h and allowed to stand overnight upon which crystals were formed. The crystals were filtered and washed with pyridine and were recrystallized from ethanol/water (1/5) to give N-[2-(pyrid-2'-yl)-2-oxoethyl]pyridinium iodide.

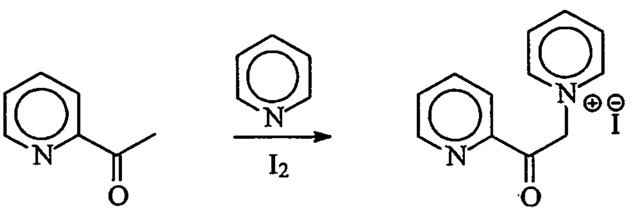


• Step e.: Synthesis of 4'-(4"'-Bromophenyl)-2,2':6',2"-terpyridine E)-3-(4"-Bromophenyl)-1-(pyrid-2'-yl)prop-2-enone (as obtained through step c, above:

5.8g, 20.0 mmol), N-[2-(pyrid-2'-yl)-2-oxoethyl]pyridinium iodide (as obtained through step d, above: 6.2g, 20.0 mmol), and ammonium acetate (40.0g, 510 mmol) were dissolved in glacial acetic acid (40 ml) and refluxed for 7 h. The obtained reaction mixture was kept at room temperature overnight and was then made alkaline by addition of 10M NaOH (70 ml). The obtained reaction mixture was extracted with $CH_2Cl_2$ through which a solid was obtained. This solid was recrystallized with acetonitrile to give 4'-(4"'-bromophenyl)-2,2':6',2"-terpyridine.

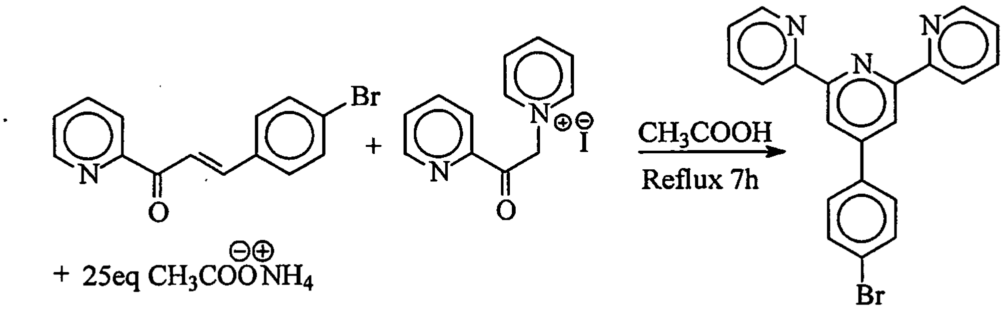


• Step f.: Synthesis of 4-[4-{2-(Trimethylsilyl)-1-ethynyl}phenyl]-2,2':6',2"-terpyridine

To a stirred solution of 4'-(4"'-bromophenyl)-2,2':6',2"-terpyridine (as obtained through step e, above) (2g, 5.15 mmol) and trimethylsilylacetylene (1.49m1, 10.5 mmol) and n-propylamine (180 ml), as solvent, was added dropwise a solution of [Pd($PPh_3$)$_4$] (0.36g, 0.312 mmol, 6 mol%) in n-propylamine (150 ml). The obtained mixture was refluxed at 60 °C overnight. The solvent was evaporated and chromatographic separation on silicagel, with chloroform as eluent, gave a solid which was recrystallized in acetonitrille to give 4'-[4-{2-(trimethylsilyl)-1-ethynyl}phenyl]-2,2':6',2"-terpyridine.

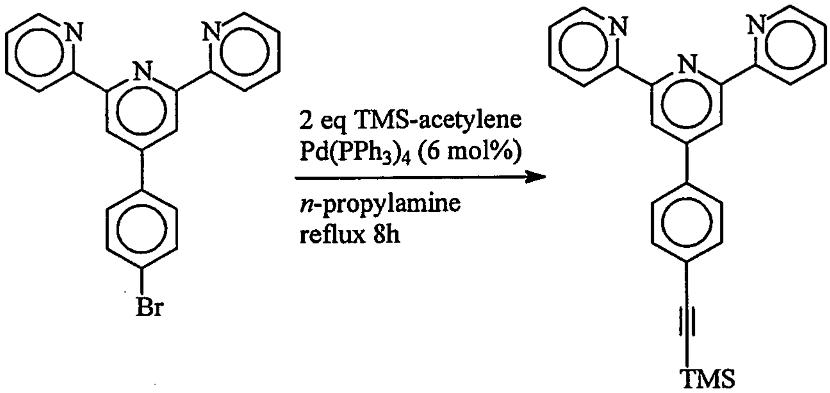


• Step g.: Synthesis of 4-(4-Ethynylphenyl)-2,2':6',2"-terpyridine

To a stirred solution of 4'-[4-{2-(trimethylsilyl)-1-ethynyl}phenyl]-2,2':6',2"-terpyridine (as obtained through step f, above) (2.3g, 5.66 mmol) in a mixture of THF tetrahydrofurane (96 ml) and methanol (60 ml) was added KF (0.36g, 6.2 mmol, 1.2 eq). The obtained mixture was stirred overnight and was concentrated by rotary evaporation to give a product which was purified by flash chromatography with $CHCl_3$ as eluent to give 4-(4-ethynylphenyl)-2,2':6',2"-terpyridine.

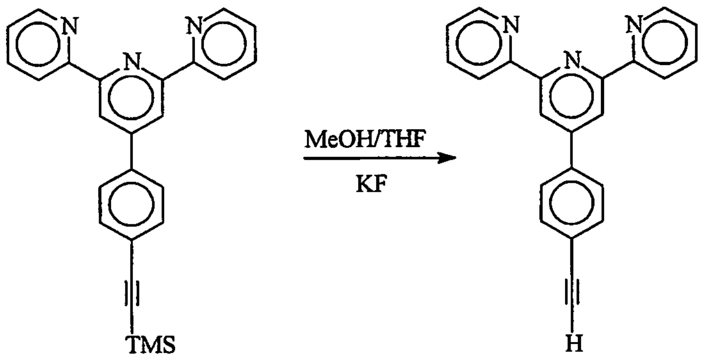


• Step h.: 1,3,5,7-Tetrakis[1,3-di-(4'-phenyl-1-ethynyl-2,2':6',2"-terpyridine)phenyl]-adamantane

To a stirred solution comprising 1,3,5,7-tetrakis(1,3-dibromophenyl)adamantane (as obtained through step b, above: 0.10g, 0.093 mmol) and 4'-(4-ethynylphenyl)-2,2':6',2"-terpyridine (as obtained through step g, above: 0.497g, 1.49 mmol) in n-propylamine (50 ml) was added a solution of $Pd[P(Ph)_3]_4$ (0.08g, 0.051 mmol) in n-propylamine (10 ml). The obtained mixture was refluxed at 60 °C and a solid precipitated during the night. The solid was filtered off and washed with n-propylamine and chromatographic separation on silicagel with successively chloroform and chloroform/methanol as eluent gave 1,3,5,7-tetrakis[1,3-di-(4'-phenyl-1-ethynyl-2,2':6',2"-terpyridine)phenyl]-adamantane which is a multifunctional molecule with a functionality of 8, as used for the synthesis of the isotropic polymeric network in phase B.

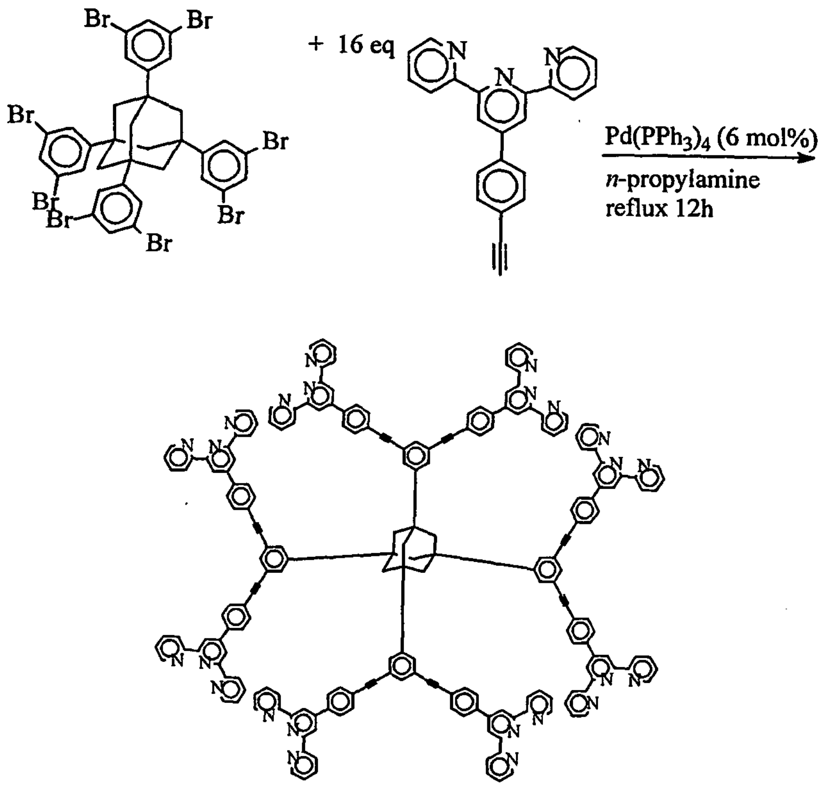


<u>Phase B:</u> Synthesis of a molecular network.

The compound obtained according to Phase A, step h, above was taken as multifunctional molecule.

To a refluxing solution comprising 0.12g, ($3.886.10^{-5}$mol) of the compound as obtained in Phase A, step h in 35ml dimethyl formamide (DMF), 38.7 mg, ($1.5544.10^{-4}$mol) $CoAc_2.4H_2O$ was added thereby forming a mixture. This

mixture was refluxed for 30 hours at a temperature of 150 °C during which a molecular network was formed. The molecular network was separated from the remainder of the mixture. Furthermore the molecular network was washed thoroughly with N,N'-dimethylformamide and was dried in vacuo after removal of the DMF, whereby an isotropic polymeric network was obtained.

Determination of the modulus of the obtained molecular network was done in the following way. An amount of powder of the molecular network was placed in a cylinder and was compacted with a narrow fitting piston in the cylinder. The diameter of the cylinder was 5 mm. The compacting of the powder, a so-called precompression, was done with a force of 2000 N. The cylinder with the molecular network and the piston were placed in a tensile tester. The powder of molecular network was compressed through the piston by the tensile tester. The compression displacement during the test was measured by using a transducer device which measured the actual, real compression displacement of the piston into the cylinder. The powder was several times compressed between 10 and 200 N in order to determine compression modulus. During the compression test a force displacement curve is determined. This allows determination of the so called longitudinal bulk modulus, which in turn can be transformed to Young's modulus with elementary mechanics equations. These equations can be found in e.g. According to History of Strength of Materials: With a Brief Account of the History of Theory of Elasticity and Theory of Structure, Stephen P. Timoshenko, or: Theory of elasticity, Mc Graw-Hill 3rd ed. 1970), S. Timoshenko and J.N. Coodier. The average stiffness was determined through Hooke's law as the ratio of force F to displacement L (i.e. $F_{@200N}$-$F_{@10N}$)/($L_{@200}$N-$L_{@10N}$). The stiffness was determined to be 6862 N/mm, which equals an apparent Young's modulus of 2389 MPa. In the same way the apparent compression modulus of a polycarbonate reference powder sample (Xantar® FN19000A, DSM Engineering Plastics: Young's modulus 2500 MPa, density 1200 kg/$m^3$) was determined. The measured apparent Young's modulus of the polycarbonate powder sample was 825 MPa.) The effect of the material being a powder is determined from the difference between the measured apparent modulus of the polycarbonate powder and the real modulus of solid polycarbonate. The ratio is 2500/825=3.03. So the real Young's modulus of the molecular network was calculated from the apparent modulus to be 2389*3.03=9.2 GPa. Density was determined to be 1102 kg/$m^3$ which resulted in a specific Young's modulus of 0.008 GPa.$m^3$/kg. Furthermore the isotropic polymeric network was isotropic and microscopic determination showed the network to be free of voids due to gas inclusion.

In the table below a comparison is given of the isotropic polymeric network of the invention and known, commercially available, polymeric materials.

| Ex. | Sample description | Young's modulus, E [GPa] | | density, d [kg/$m^3$] | E/d [GPa.$m^3$/kg] |
|---|---|---|---|---|---|
| | | direction 1 | direction 2 | | |
| I | Isotropic polymeric material from Example I | 9.2 | 9.2 | 1102 | 0.008 |
| C-A | Polycarbonate, Xantar FN1900A* | 2.5 | 2.5 | 1200 | 0.002 |
| C-B | Isotropic polymeric network: well-cured unsaturated polyester resin | 4.3 | 4.3 | 1200 | 0.0036 |
| C-C | Isotropic polymeric network: Melamineformaldehyde** | 7 | 7 | 1500 | 0.005 |
| *DSM Engineering Plastics<br>** Furthermore containing 30wt% woodpulp. Kunststoff Handbuch, 10 Duroplaste, Becker/Braun, 1988, Carl Hanser Verlag, page 269, ISBN 3-446-14418-8 | | | | | |

From the table above where the properties of the material from Example I are shown together with properties of known polymeric materials in Comparative Experiments C-A, C-B and C-C. It is obvious that the known and commercially available polymeric materials have a specific stiffness around 0.003 and that the isotropic polymeric network from Example I is exeptional in this respect and shows a very high specific Young's modulus.

## Claims

1. Process for the production of an isotropic polymeric network comprising multifunctional molecules with a functionality, n, of at least 5 by contacting in a solvent an amount of the multifunctional molecules with an amount of a coupling agent, whereby through supramolecular chemistry a bond between the multifunctional molecule and the coupling agent is formed.

2. Process according to claim 1 whereby the coupling agent comprises a transition metal and whereby a bond between the multifunctional molecule and the coupling agent is formed through complexation of the transition metal.

3. Process for the production of a isotropic polymeric network according to claim 1, wherein the ratio of the molar amount of the coupling agent to the multifunctional molecule equals n/2.

4. Process for the production of an isotropic polymeric network according to any one of claims 1-2, wherein wherein the sum, ρ, of the amounts of the multifunctional molecules and coupling agent per unit of volume, in $kg/m^3$, is at least equal to the value as given by expression (I)

$$\frac{a(m_1 + \frac{n}{2} m_2)}{10^{26}(d+L)^3} \qquad \textbf{(I)}$$

in which

a = 0.2
d = the diameter of the multifunctional molecule, including the length of the bonds to the middle of atoms of the coupling agent to which it is attached.
L = the length of the coupling agent, measured between the middle of the atoms that are connected to the multifunctional molecule.
$m_1$ = the molecular mass of the multifunctional molecule as present in the isotropic polymeric network
$m_2$ = the molecular mass of the coupling agent as present in the isotropic polymeric network
n = the functionality of the multifunctional molecule ($n \geq 5$).

5. Isotropic polymeric network comprising multifunctional molecules with a functionality of at least 5 and a coupling agent, whereby through supramolecular chemistry a bond between the multifunctional molecule and the coupling agent is formed, with a specific Young's modulus of at least 0.007 $GPa.m^3/kg$ and a density lower than 1300 $kg/m^3$.

6. Isotropic polymeric network according to claim 5, wherein the network is substantially free of cavities comprising a gas.

7. Shaped article comprising the isotropic polymeric network according to any one of claims 5-6.

8. Use of the isotropic polymeric network of any one of claims 5-6 as a construction material.

**Patentansprüche**

1. Verfahren zur Herstellung eines isotropen polymeren Netzwerks umfassend multifunktionelle Moleküle mit einer Funktionalität n von mindestens 5, durch Kontaktieren einer Menge der multifunktionellen Moleküle in einem Lösungsmittel mit einer Menge eines Kopplungsmittels, wobei durch supramolekulare Chemie eine Bindung zwischen dem multifunktionellen Molekül und dem Kopplungsmittel gebildet wird.

2. Verfahren nach Anspruch 1, wobei das Kopplungsmittel ein Übergangsmetall umfasst und wobei eine Bindung zwischen dem multifunktionellen Molekül und dem Kupplungsmittel durch Komplexbildung des Übergangsmetalls gebildet wird.

3. Verfahren zur Herstellung eines isotropen polymeren Netzwerks nach Anspruch 1, wobei das Verhältnis der molaren Menge des Kopplungsmittels zum multifunktionellen Molekül gleich n/2 ist.

4. Verfahren zur Herstellung eines isotropen polymeren Netzwerks nach einem der Ansprüche 1 - 2, wobei die Summe ρ der Mengen der multifunktionellen Moleküle und des Kopplungsmittels pro Volumeneinheit in $kg/m^3$ mindestens dem Wert, wie durch den Ausdruck (I)

$$\frac{a(m_1+\frac{n}{2}m_2)}{10^{26}(d+L)^3} \quad \text{(I)}$$

angegeben, gleich ist,
wobei

a = 0,2
d = Durchmesser des multifunktionellen Moleküls, einschließlich der Länge der Bindungen bis zur Mitte von Atomen des Kopplungsmittels, an das es angeknüpft ist.
L = Länge des Kopplungsmittels, von der Mitte zur Mitte der Atome gemessen, die durch das multifunktionelle Molekül verbunden sind.
$m_1$ = Molmasse des multifunktionellen Moleküls, wie es in dem isotropen polymeren Netzwerk vorliegt
$m_2$ = Molmasse des Kopplungsmittels, wie es in dem isotropen polymeren Netzwerk vorliegt
n = Funktionalität des multifunktionellen Moleküls ($n \geq 5$).

**5.** Isotropes polymeres Netzwerk umfassend multifunktionelle Moleküle mit einer Funktionalität von mindestens 5 und ein Koppplungsmittel, wobei durch supramolekulare Chemie eine Bindung zwischen dem multifunktionellen Moleklül und dem Kopplungsmittel gebildet wird, mit einem spezifischen Young-Modul von mindestens 0,007 GPa.$m^3$/kg und einer Dichte von weniger als 1300 kg/$m^3$.

**6.** Isotropes polymeres Netzwerk nach Anspruch 5, wobei das Netzwerk im Wesentlichen von Gas umfassenden Hohlstellen frei ist.

**7.** Geformter Gegenstand umfassend das isotrope polymere Netzwerk nach einem der Ansprüche 5 - 6.

**8.** Verwendung des isotropen polymeren Netzwerks nach einem der Ansprüche 5 - 6 als Konstruktionsmaterial.

**Revendications**

**1.** Procédé pour produire un réseau polymère isotrope comprenant des molécules multifonctionnelles ayant une fonctionnalité n supérieure ou égale à 5 par mise en contact dans un solvant d'une quantité de molécules multifonctionnelles avec une quantité d'un agent de couplage, une liaison étant formée entre la molécule multifonctionnelle et l'agent de couplage par un processus de chimie supramoléculaire.

**2.** Procédé selon la revendication 1, **caractérisé en ce que** l'agent de couplage comprend un métal de transition et **en ce qu'**une liaison entre la molécule multifonctionnelle et l'agent de couplage est formée par complexation du métal de transition.

**3.** Procédé pour produire un réseau polymère isotrope selon la revendication 1, **caractérisé en ce que** le rapport molaire entre l'agent de couplage et la molécule multifonctionnelle est de n/2.

**4.** Procédé pour produire un réseau polymère isotrope selon l'une quelconque des revendications 1 et 2, **caractérisé en ce que** la somme ρ des quantités de molécules multifonctionnelles et d'agent de couplage par unité de volume, en kg/$m^3$, est supérieure ou égale à la valeur donnée par l'expression (I)

$$\frac{a(m_1+\frac{n}{2}m_2)}{10^{26}(d+L)^3} \quad \text{(I)}$$

dans laquelle

a = 0,2
d = le diamètre de la molécule multifonctionnelle, y compris la longueur des liaisons vers le milieu des atomes de l'agent de couplage auquel elle est attachée
L = la longueur de l'agent de couplage, mesurée entre le milieu des atomes reliés à la molécule multifonctionnelle
$m_1$ = la masse moléculaire de la molécule multifonctionnelle telle que présente dans le réseau polymère isotrope
$m_2$ = la masse moléculaire de l'agent de couplage tel que présent dans le réseau polymère isotrope
n = la fonctionnalité de la molécule multifonctionnelle ($n \geq 5$).

**5.** Réseau polymère isotrope comprenant des molécules multifonctionnelles ayant une fonctionnalité supérieure ou égale à 5 et un agent de couplage, **caractérisé en ce qu'**une liaison est formée entre la molécule multifonctionnelle et l'agent de couplage par un processus de chimie supramoléculaire, ledit réseau présentant un module de Young spécifique supérieur ou égal à 0,007 GPa.$m^3$/kg et une densité inférieure à 1 300 kg/$m^3$.

**6.** Réseau polymère isotrope selon la revendication 5, **caractérisé en ce que** le réseau est sensiblement exempt de cavités renfermant un gaz.

**7.** Article façonné comprenant le réseau polymère isotrope selon l'une quelconque des revendications 5 et 6.

**8.** Utilisation du réseau polymère isotrope selon l'une quelconque des revendications 5 et 6 en tant que matériau de construction.

FORMULA SHEET

Structure A

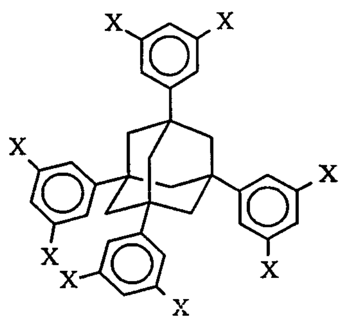

Structure B

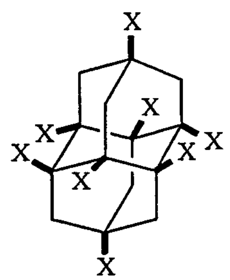

Structure C

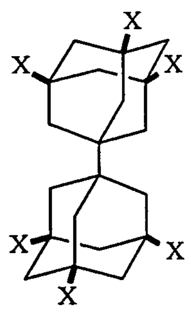

FORMULA SHEET, continued

Structure D

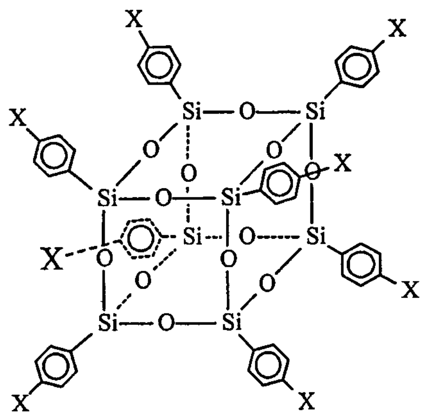

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Ullman's Encyclopedia of Industrial Chemistry. Wiley-VCH Verlag, 15 June 2000
- **BECKER ; BRAUN.** Becker/Braun. Carl Hanser Verlag, 1988, 269